# EUROPEAN PATENT SPECIFICATION

(11) **EP 1 691 650 B1**
(45) Date of publication and mention of the grant of the patent: **03.12.2008**
(21) Application number: 04799257.3
(22) Date of filing: 26.11.2004
(51) Int. Cl.: A47J 31/06

(54) **BEVERAGE MAKING DEVICE COMPRISING A BREWING CHAMBER FOR ENCLOSING A PAD**
GETRÄNKEZUBEREITUNGSVORRICHTUNG MIT EINER BRÜHKAMMER ZUM EINLEGEN EINES BEUTELS
DISPOSITIF DE PREPARATION DE BOISSONS AVEC UNE CHAMBRE A INFUSION POUR RENFERMER DES SACHETS

(30) Priority: 04.12.2003 EP 03257637
(43) Date of publication of application: 23.08.2006
(73) Proprietor: Koninklijke Philips Electronics N.V., 5621 BA Eindhoven (NL)
(72) Inventor: KODDEN, Hans, NL-5656 AA Eindhoven (NL); WOOD, Gemma, L., NL-5656 AA Eindhoven (NL); SNELL, Richard, A., NL-5656 AA Eindhoven (NL); BLATCHER, Stephen, NL-5656 AA Eindhoven (NL); HARRIS, David, S., NL-5656 AA Eindhoven (NL)
(74) Representative: Schouten, Marcus Maria
(86) International application number: PCT/IB2004/052568
(87) International publication number: WO 2005/053485

(56) References cited:
- EP-A- 0 627 186
- WO-A-01/15582
- FR-A- 2 770 987
- GB-A- 2 366 510
- US-A- 4 988 019
- US-A- 5 649 472
- US-A1- 2003 096 038

## Description

The invention is related to a beverage making device comprising a brewing chamber for enclosing one or more pads containing a substance from which the beverage is to be brewed, means for supplying water to said brewing chamber, and means for guiding the brewed beverage from the brewing chamber.

Such a device is described in WO-A-01/15582. The described device comprises a water reservoir and means for heating the water and pumping it to holes in the upper wall of the brewing chamber, so that the heated water can enter the brewing chamber under pressure. The brewing chamber encloses a pad, also called a pouch, made of filter material and containing a substance to be extracted, for example ground coffee. The heated water will pass through the pad, so that the coffee is extracted. During the extraction process, the brewed beverage (coffee) leaves the brewing chamber through an outflow opening in the bottom of the brewing chamber and arrives in a beverage collection chamber. The beverage collection chamber comprises an outflow tube extending outside the device, so that the brewed beverage (coffee) can be caught by one or by two cups. The portion of the device comprising the upper wall of the brewing chamber can hinge upwards with respect to the stationary part of the brewing chamber to give access to the brewing chamber, so that a new pad can be placed for a next extraction process. In the upward position of said portion, the part of the device comprising the lower wall of the brewing chamber can be removed from the device, for example for cleaning the part and/or for replacing the part with another, similar part with which the brewing chamber is made larger, so that two pads can be inserted in order to brew enough beverage for two cups instead of one cup. Also the beverage collection chamber can be removed from the device in order to clean it by rinsing or washing.

The device can make a beverage in an extraction process, for example coffee, or in a dissolving process, for example a chocolate drink. In the case of an extraction process, the extracted substance will remain in the pad and the pad with the extracted substance must be removed from the brewing chamber after the brewing process. In the case of a dissolving process, the substance in the pad will disappear during the brewing process, and the empty pad must be removed. The pad may contain a rigid or an elastic internal framework to maintain the outside dimensions of the pad during the dissolving process.

After the pad has been removed from the brewing chamber there will remain some liquid in the brewing chamber. At least the walls, especially the lower wall of the brewing chamber, will remain wet, because not all the brewed beverage will have left the brewing chamber through the outflow opening in the lower wall.

An object of the invention is to remove any residual brewed beverage and/or other liquids from the brewing chamber after the brewing process has been completed, in other words, to obtain a cleaner brewing chamber after the pad has been removed.

To accomplish that objective, the beverage making device is provided as defined in claim 1. Squeezing of the pad reduces the quantity of liquid in the pad, and a major portion of the liquid thus forced from the pad during the squeezing action will be conducted from the brewing chamber through the outflow opening. After the squeezing action, the pad will act as a sponge and suck up the remainder of the liquid from the brewing chamber before the pad is removed. The brewing chamber will thus be drier than before the squeezing action. Furthermore, the pad will contain less excess residual beverage after it has been removed from the brewing chamber, so that dripping during disposal will be reduced.

In one preferred embodiment, the brewing chamber has an upper wall and a lower wall, and the pad, or pads as the case may be, can be located between said walls, while means are present for temporarily reducing the distance between said upper wall and said lower wall. The pad or pads will thus be squeezed between the two walls. A flexible sealing ring may be applied between said upper wall and said lower wall to reduce said distance, which ring seals the brewing chamber in both mutual positions of the walls, both at the greater distance and at the smaller distance from each other.

Preferably, said distance can be reduced by more than 5 %, more preferably by more then 10%, relative to said distance during the brewing process. Or, in absolute dimensions, preferably said distance can be reduced by more than 0,5 mm, more preferably by more than 1.5 mm, relative to said distance during the brewing process. The lower wall of the brewing chamber may be formed by a removable part of the device, which part can be removed for cleaning or for replacement by a different part, so that two pads instead of one pad fit in the brewing chamber.

The upper wall of the brewing chamber is part of a lid that can lie lifted to open the brewing chamber, and said lid, together with said upper wall, can move downward before the lid is lifted upward to open the brewing chamber. The squeezing movement is integrated in the movement of the lid of the device that moves in order to open the brewing chamber. Said lid can hinge about a horizontal axis.

A latch mechanism can keep the brewing chamber closed, which latch can be released in that the lid is pressed downward. This embodiment will be further elucidated hereinafter.

In one preferred embodiment, the central portion of said upper wall is extended downwardly in order to create a dome that can press in the central part of the pad so as to squeeze the pad.

The invention will now be explained by means of a description of an embodiment of a device for making coffee, wherein reference is made to the drawing comprising four Figures, in which:
Fig. 1 is a front view of the upper part of a coffee making device;
Fig. 2 is a sectional view taken on the line II-II in Fig. 1;
Fig. 3 is a sectional view with the lid closed; and
Fig. 4 is a sectional view with the lid pressed down.

The Figures are schematic representations showing only relevant portions of the device. The coffee making device according to the described embodiment comprises a stationary part 1 and a hinging part 2. The stationary part 1 comprises the lower wall 8,9 of the brewing chamber and the hinging part 2 includes the upper wall 3 of the brewing chamber. The stationary part 1 furthermore comprises a water container and means for heating the water and pumping a predetermined quantity of the heated water to the brewing chamber, which portions of the device are not shown in the Figures.

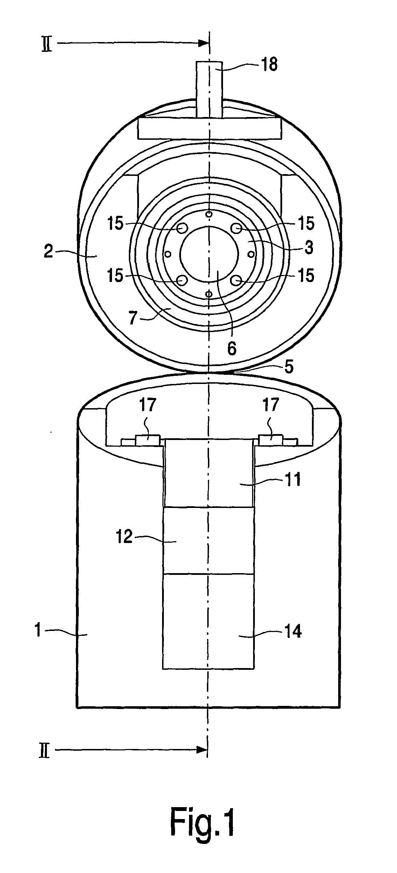

Figure 1 is a front view of the uppermost portion of the device for making coffee, showing the stationary part 1 and the hinging part, or lid 2 of the device. The lid 2 is represented in the open position, i.e. the position in which the brewing chamber is accessible, for example for replacing the pad 4. The upper wall 3 of the brewing chamber is in a substantially vertical position in this case.

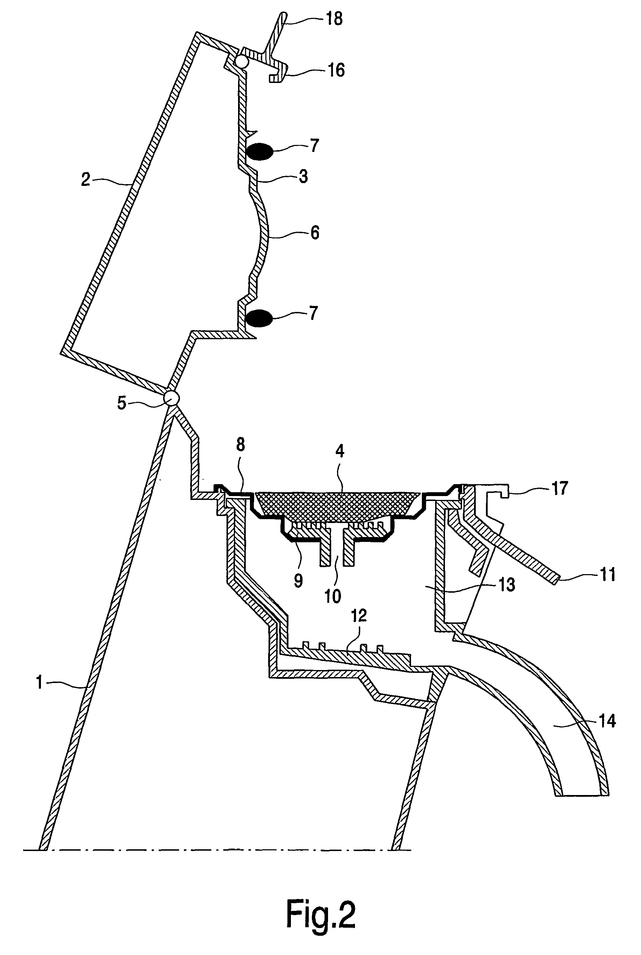

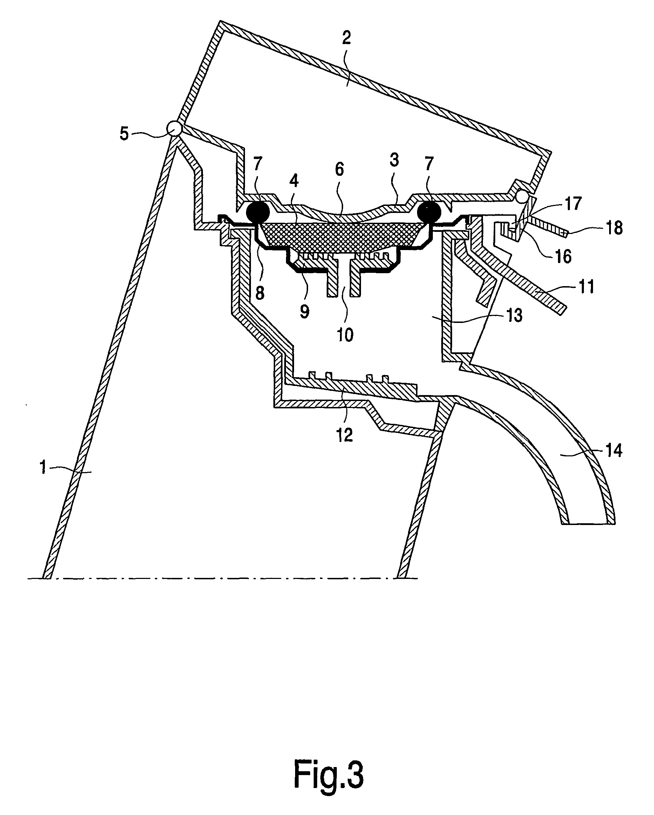

Figures 2 and 3 are sectional views with the lid 2 shown in open position (Figure 2) and in closed position (Figure 3) respectively. The 2 hinges about an axis 5, so that it can make a rotating movement. These two Figures show the upper wall 3 of the brewing chamber, which upper wall 3 is provided with a spherical protrusion 6 in its central part, i.e. a dome in the wall 3. A flexible sealing ring 7 is attached to the hinging lid 2 around the upper wall 3.

A first removable part, forming the lower wall of the brewing chamber, is composed of a metal part 8 with attached to it a plastic element 9 having a central outflow opening 10. At its upper side, the plastic element 9 is provided with a number of protrusions to support the pad 4 and to create space for conducting the brewed beverage between the protrusions. The first removable part 8,9 as shown in the Figures is designed to contain one pad 4. It can be replaced by a different removable part being designed to contain two pads 4, in which case it encloses more space.

The first removable part 8,9 is provided with a handle 11 to facilitate its removal from the stationary part 1 of the device. The first removable part 8,9 can be removed for replacement or cleaning.

Below said first removable part 8,9 there is a second removable part 12, enclosing a beverage collection chamber 13 and provided with a beverage outflow tube 14 that extends outside the stationary part 1 of the device. The brewed beverage, collected in collection chamber 13, leaves the device through outflow tube 14 and can be caught in a cup or the like.

When the lid 2 is closed, sealing ring 7 abuts against the upper wall 3 as well as against said part 8 of the first removable part 8,9, so that the brewing chamber is closed, except for the holes 15 in the upper wall 3 for supplying heated water to the brewing chamber, and except for the outflow opening 10. The brewing chamber may enclose a pad 4, as is shown in Figure 3. Heated water is supplied through holes 15 in the upper wall 3 and passes through the pad 4 to extract coffee. The brewed coffee leaves the brewing chamber through the outflow opening 10. Then the brewed coffee will be collected in the beverage collection chamber 13 and subsequently leave the device through outflow tube 14.

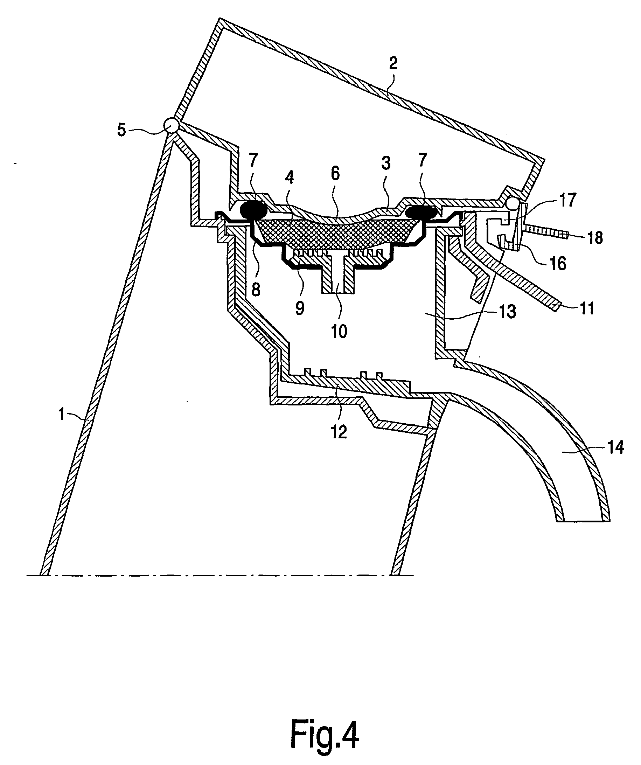

As is shown in Figure 3, the lid 2 is kept closed by a hinging latch 16 engaging a downwardly extending edge 17 of the stationary part 1 of the device. The latch 16 can only be released in that the lid 2 is moved in downward direction, as is shown in Figure 4. The upper wall 3 of the brewing chamber is moved towards the lower part 8, 9 thereby, so that the dome 6 is pressed into the pad 4. This movement squeezes the pad 4, so that excess residue liquid will leave the pad 4 and will leave the brewing chamber through outflow opening 10. When the lid 2 is subsequently opened, the pad 4 will act as a sponge, sucking up any residual liquid present in the brewing chamber.

During the brewing process, the lid 2 cannot be opened because the engagement of latch 16 with edge 17 is maintained by a force caused by the fluid pressure in the brewing chamber. After the brewing process, the lid 2 can be pushed downward against the force of the sealing ring 7 in order to open the lid 2. The latch 16 may be provided with a handle 18 to move it. The latch 16 may be loaded by spring means to push it in one direction, while it can be turned in the other direction by said handle 18.

The embodiment as described above is merely an example of the beverage making device; a great many other embodiments are possible.

## Claims

1. A beverage making device comprising a brewing chamber for enclosing one or more pads (4) containing a substance from which the beverage is to be brewed, means (15) for supplying water to said brewing chamber, and means (10) for conducting the brewed beverage from the brewing chamber, wherein the brewing chamber has an upper wall (3) and a lower wall, wherein the pad (4) or pads can be located between said walls, wherein the upper wall of the brewing chamber is part of a lid that can be lifted to open the brewing chamber, wherein said lid (2) can hinge about a horizontal axis (5) in order to open the brewing chamber, and wherein a latch mechanism (16, 17, 18) can keep the brewing chamber closed, **characterized by** means for squeezing the pad (4) after the brewing process has been finished but before the brewing chamber is opened to remove the pad (4), wherein the squeezing movement is integrated in the movement of the lid and said lid (2), together with said upper wall (3), can move downwards before the lid (2) is moved upwards to open the brewing chamber, and wherein the latch (16) can be released in that the lid (2) is pressed downwards.

2. A beverage making device as claimed in claim 1, **characterized in that** a central portion (6) of the upper wall (3) is extended in downward direction.

3. A beverage making device as claimed in claim 1 or 2, **characterized in that,** during a brewing process, a distance between the upper wall (3) and the lower wall increases owing to fluid pressure in the brewing chamber.

## Patentansprüche

1. Getränkezubereitungsvorrichtung mit einer Brühkammer, zum Umschließen eines oder mehrere Pads (4), die eine Substanz enthalten, aus der das Getränk aufgebrüht werden soll, Mitteln (15), zum Zuführen von Wasser an die genannte Brühkammer und Mitteln (10) zum Leiten des aufgebrühten Getränks aus der Brühkammer heraus, wobei die Brühkammer eine obere Wand (3) und eine untere Wand aufweist, wobei das Pad (4) oder die Pads zwischen den genannten Wänden platziert werden kann oder können, wobei die obere Wand der Brühkammer Teil eines Deckels ist, der angehoben werden kann, um die Brühkammer zu öffnen, wobei der genannte Deckel (2) um eine horizontale Achse (5) schwenken kann, um die Brühkammer zu öffnen, und wobei ein Verriegelungsmechanismus (16, 17, 18) die Brühkammer geschlossen halten kann, **gekennzeichnet durch** Mittel, um das Pad (4) nach Beendigung des Brühvorganges, aber vor dem Öffnen der Brühkammer, um das Pad (4) zu entfernen, auszupressen, wobei die Pressbewegung in die Bewegung des Deckels integriert ist und der genannte Deckel (2), zusammen mit der genannten oberen Wand (3), sich nach unten bewegen kann, bevor der Deckel (2) nach oben bewegt wird, um die Brühkammer zu öffnen, und wobei die Verriegelung (16) gelöst werden kann, indem der Deckel (2) nach unten gedrückt wird.

2. Getränkezubereitungsvorrichtung nach Anspruch 1, **dadurch gekennzeichnet, dass** ein zentraler Abschnitt (6) der oberen Wand (3) sich nach unten erstreckt.

3. Getränkezubereitungsvorrichtung nach Anspruch 1 oder 2, **dadurch gekennzeichnet, dass** während eines Brühvorganges infolge des Flüssigkeitsdrucks in der Brühkammer ein Abstand zwischen der oberen Wand (3) und der unteren Wand zunimmt.

## Revendications

1. Dispositif de préparation de boissons comprenant une chambre d'infusion pour enfermer un ou plusieurs sachets (4) contenant une substance à partir de laquelle la boisson doit être infusée, des moyens (15) pour fournir de l'eau à ladite chambre d'infusion et des moyens (10) pour conduire la boisson infusée en provenance de la chambre d'infusion, dans lequel la chambre d'infusion présente une paroi supérieure (3) et une paroi inférieure, dans lequel le sachet (4) ou les sachets peuvent se situer entre lesdites parois, dans lequel la paroi supérieure de la chambre d'infusion fait partie d'un couvercle qui peut être soulevé pour ouvrir la chambre d'infusion, dans lequel ledit couvercle (2) peut s'articuler autour d'un axe horizontal (5) afin d'ouvrir la chambre d'infusion et dans lequel un mécanisme de verrouillage (16, 17, 18) peut maintenir fermée la chambre d'infusion, **caractérisé par** des moyens pour serrer le sachet (4) après que le processus d'infusion a été terminé mais avant que la chambre d'infusion ne soit ouverte pour enlever le sachet (4) où le mouvement de serrage est intégré dans le mouvement du couvercle et où ledit couvercle (2), conjointement avec ladite paroi supérieure (3), peut se déplacer en bas avant que le couvercle (2) ne soit déplacé en haut pour ouvrir la chambre d'infusion et où le mécanisme de verrouillage (16) peut être dégagé du fait que le couvercle (2) est pressé en bas.

2. Dispositif de préparation de boissons selon la revendication 1, **caractérisé en ce qu'**une partie centrale (6) de la paroi supérieure (3) est prolongée dans la direction de haut en bas.

3. Dispositif de préparation de boissons selon la revendication 1 ou 2, **caractérisé en ce que,** pendant un processus d'infusion, une distance comprise entre la paroi supérieure (3) et la paroi inférieure augmente en raison de la pression du liquide dans la chambre d'infusion.
